# EUROPÄISCHE PATENTANMELDUNG

(11) **EP 1 270 818 A2**
(43) Veröffentlichungstag der Anmeldung: **02.01.2003**
(21) Anmeldenummer: 02405525.3
(22) Anmeldetag: 21.06.2002
(51) Int. Cl.: E01D 19/06, G01M 5/00

(54) **Verfahren und Vorrichtung zur Zustandsprüfung von Fahrbahnübergängen vom Typ Finger**

(30) Priorität: 22.06.2001 CH 11402001
(71) Anmelder: Eidgenössische Materialprüfungs- und Forschungsanstalt EMPA, 8600 Dübendorf (CH)
(72) Erfinder: Kramer, Hans, 8340 Hinwil (CH)
(74) Vertreter: Felber, Josef

(57) **Zusammenfassung**

Das Verfahren dient zur Zustandsprüfung von Fahrbahnübergängen vom Typ Finger, welche je ein erstes Element (10) aus einem Elastomer/Stahlverbund zum Anschluss an einen Fahrbahnabschnitt (4) aufweisen, welches Element (10) Finger (14) und dazwischen angeordnete Auflageflächen (11) aufweist, sowie ein dazu gehöriges zweites Element (13) aus Elastomer/Stahlverbund zum Anschluss an den anschliessenden Fahrbahnabschnitt (5), welches Element (13) Finger (12) aufweist, die auf den Auflageflächen (11) zwischen den Fingern (14) des ersten Elementes (10) aufliegen. Das Verfahren zeichnet sich dadurch aus, dass jedes Elastomer/Stahl-Element (13) mit aufliegenden Fingern (12) an denselben mit steigender Zugkraft angehoben wird und die Schwenkung des Elementes (13) in Abhängigkeit der Zugkraft vermessen wird. Die Vorrichtung zur Durchführung des Verfahrens zeichnet sich dadurch aus, dass sie einen Brückenrahmen (17) aufweist, sowie ein an diesem befestigtes Hebezeug (20;21) mit variabler, messbarer Zugkraft, sowie mindestens ein, vorzugsweise aber mindestens zwei elektrische Wegsensoren (40-43) zur gleichzeitigen Messung von vertikalen Bewegungen am vorderen und hinteren Rand des zu messenden Elastomer/Stahl-Elementes (13) mit den aufliegenden Fingern (12). Vorzugsweise besteht das Hebezeug (20;21) aus einer hydraulischen Kolben-Zylindereinheit (22;23), die mit einem elektrischen Zugkraftsensor (36) ausgerüstet ist. Die elektrischen Signale des Zugkraftsensors (36) und der Wegsensoren (40-43) können mittels eines Personalcomputes zu einem Weg-Kraft-Diagramm verarbeitet werden.

## Beschreibung

Diese Erfindung betrifft ein Verfahren, mittels dessen sich der Zustand eines Fahrbahnüberganges des Typs Finger überprüfen lässt, sowie ausserdem eine Vorrichtung zur Durchführung des Verfahrens.

Fahrbahnen von Strassen, welche über Brücken, Überführungen, Viadukte oder ähnliche Bauwerke führen, unterliegen wegen der durch die Jahreszeiten sowie durch das Wetter bestimmten Temperaturunterschiede beträchtlichen Dilatationen. Um diese Dilatationen zu kompensieren, werden Fahrbahnübergänge in Form von Dilatationsfugen ausgeführt. Kleine Fugenbewegungen können zum Beispiel durch ein Elastomerprofil überbrückt und abgedichtet werden, das in quer zur Fahrbahnrichtung verlaufenden Metallschienen eingelassen ist. Bei grösseren Fugenbewegungen werden solche Elemente dann in Serie geschaltet, also mit einer Vielzahl nebeneinanderliegender Metallschienen. Diese sogenannten Rollenübergänge weisen dann mehrere quer zur Fahrbahn liegende Fugen auf. Nachteilig ist bei solchen Übergängen, dass sie beim Überfahren in den Fahrzeugen unangenehme Vibrationen und Geräusche verursachen. Noch bedeutsamer ist der Nachteil, dass die Fahrzeugreifen heftige Schlaggeräusche verursachen, welche zu einer grossen Lärmbelastung in der Umgebung führen, die namentlich für Anwohner sehr störend ist. Auch die Wartung und Reparatur solcher Dilatationsfugen ist aufwendig. Deshalb werden alternativ schon seit über 25 Jahren Fahrbahnübergänge vom Typ Finger eingesetzt, welche diese Nachteile überwinden. Es handelt sich bei diesen sogenannten Finger-Übergängen um Elastomer/Stahl-Elemente, die ähnlich wie Kämme gestaltet sind. Zwei solche kammartige Elemente erstrecken sich über die Fahrbahn, wobei die Finger der Kämme aufeinander zu gerichtet sind. Die Finger des einen Kammes greifen zwischen die Finger des gegenüberliegenden ein und liegen auf einer durch denselben gebildeten Auflagefläche auf, an welcher dessen Finger angeformt sind. Die Oberfäche aller ineinandergreifenden Finger liegt in ein und derselben Ebene, sodass also für einen darüberrollenden Reifen quasi eine durchgehende Rollfläche gebildet wird und kein durchgehender Spalt mehr überrollt werden muss. Diese einander gegenüberliegenden Stahl-Elemente sind in Elastomer gelagert und können daher in allen Richtungen elastisch etwas nachgeben.

Derartige Finger-Fahrbahnübergänge bieten mehrfache Vorteile. Zunächst bieten sie für die überfahrenden Reifen eine quasi durchgehende Rollfläche, weil die einzelnen, nebeneinander aneinander anliegenden Finger wesentlich schmaler als die Reifenbreite der Fahrzeuge sind. Wegen der durchgehenden Rollfläche treten keine Schläge mehr auf wie sie beim Überfahren eines Spaltes unvermeidlich sind. Daher ist der Fahrkomfort beim Überfahren der Übergänge wesentlich höher und vor allem werden die Überfahrgeräusche in der Umgebung drastisch reduziert. Dazu tragen auch die Elastomer-Lagerungen bei, welche schlag- und somit geräuschdämpfend wirken. Solche Fahrbahnübergänge können zudem in handlichen Elementen verlegt werden und deren Abdichtung kann unterbruchslos angeschlossen werden.

Wegen dieser bedeutsamen Vorteile fanden solche Finger-Fahrbahnübergänge eine grosse Verbreitung. Die Erfahrungen in der Praxis zeigen nun allerdings, dass die prognostizierte Lebensdauer dieser Elastomer/Stahl-Bauteile von 25 Jahren nicht in jedem Fall erreicht wird. Es haben sich inzwischen mehrere Schwachstellen gezeigt. Diese können zum Beispiel in gewissen konstruktiven Details liegen. Weiter kommen Produktionsmängel vor, mangelhafte Qualität des Metall-Gummi-Verbundes, Mängel beim Einbau, vorzeitige Korrosion der Stahlteile sowie auch mögliche Beschädigungen, hervorgerufen durch die Beanspruchung im Betrieb. Nicht mehr sicher gehalterte Elemente können sich aus dem Fugenbereich verschieben, so dass die Fuge nicht mehr überbrückt ist. Des weiteren können sich nicht mehr gehalterte Elemente beim Überfahren in der Fuge aufstellen und sich mit dem Fahrzeugunterboden des darüber fahrenden Fahrzeuges verkeilen und so zu Unfällen führen. Sogar ein Überragen der Spitzen über das Fahrbahnniveau hinaus in einer Art, dass beim Überfahren in Richtung gegen die Spitzen hin die Reifen von Fahrzeugen zum Platzen gebracht werden, ist denkbar. Losgelöste Elemente stellen somit ein gravierendes Sicherheitsrisiko dar. Es ist daher unumgänglich geworden, die erbauten Fahrbahnübergänge regelmässig auf ihren Zustand hin zu überprüfen. Dabei hat sich gezeigt, dass blosse Sichtkontrollen nicht genügen, weil die Mängel in der Regel nicht sichtbar sind. Wenn sich Schäden erstmals sichtbar zeigen, ist das kritische Ausmass der Mängel schon weit überschritten.

Bei den heutigen dicht gewordenen Verkehrsflüssen ist die Sperrung einer Strasse zwecks Überprüfung dieser Fahrbahnübergänge generell höchst unerwünscht. Die mit einer Fahrbahnsperrung regelmässig und unweigerlich verursachten Staus führen letztlich zu enormen volkswirtschaftlichen Folgekosten. Eine Prüfmethode für solche Fahrbahnübergänge sollte daher nebst ihrer Zuverlässigkeit möglichst rasch anwendbar sein, damit die Fahrbahn nur für eine sehr kurze Zeitspanne gesperrt werden muss. Werden ganze Streckenabschnitte mit einer Vielzahl von Fahrbahnübergängen überprüft, so sollte die Prüfung gleichzeitig an mehreren Übergängen durchgeführt werden können, wobei an den einzelnen Übergängen synchronisiert an den Verkehrsdurchfluss mit einer jeweiligen Verzögerung ab dem ersten Übergang begonnen werden sollte.

Die Aufgabe dieser Erfindung ist es deshalb, ein Verfahren zur Zustandsprüfung von Fahrbahnübergängen vom Typ Finger anzugeben, welches zuverlässige Daten über den Zustand des Fahrbahnüberganges liefert und zudem möglichst rasch durchführbar ist, damit eine Fahrbahn nur während einer minimalen Zeitspanne abgesperrt werden muss. Weiter ist es die Aufgabe dieser Erfindung, eine Vorrichtung zur Durchführung des Verfahrens anzugeben.

Diese Aufgabe wird einerseits gelöst von einem Verfahren zur Zustandsprüfung von Fahrbahnübergängen vom Typ Finger, welche je ein erstes Element aus einem Elastomer/Stahlverbund zum Anschluss an einen Fahrbahnabschnitt aufweisen, welches Element Finger und dazwischen angeordnete Auflageflächen aufweist, sowie ein dazu gehöriges zweites Element aus Elastomer/Stahlverbund zum Anschluss an den anschliessenden Fahrbahnabschnitt, welches Element in seinem hinteren Bereich über einen Elastomerblock mit dem Untergrund verschraubt ist und Finger aufweist, welche auf den Auflageflächen zwischen den Fingern des ersten Elementes aufliegen, wobei sich das Verfahren dadurch auszeichnet, dass jedes Elastomer/Stahl-Element mit aufliegenden Fingern an denselben mit steigender Zugkraft angehoben wird und die Schwenkung des Elementes in Abhängigkeit der Zugkraft vermessen wird.

Die Aufgabe wird des weiteren gelöst von einer Vorrichtung zur Durchführung des Verfahrens zur Zustandsprüfung von Fahrbahnübergängen vom Typ Finger, die sich dadurch auszeichnet, dass sie einen Brückenrahmen aufweist, sowie ein an diesem befestigtes Hebezeug mit variabler, messbarer Zugkraft, sowie zwei elektrische Wegmess-Sonden am gleichen oder an einem weiteren Brückenrahmen zur gleichzeitigen Messung von vertikalen Bewegungen am vorderen und hinteren Rand des zu messenden Elastomer/Stahl-Elementes mit den aufliegenden Fingern.

In den beiliegenden Zeichnungen ist ein Fahrbahnübergang vom Typ Finger dargestellt und sein Aufbau wird beschrieben. Hernach sind zwei mögliche Ausführungen einer Vorrichtung zur Durchführung des Prüfverfahrens gezeigt und anhand dieser Zeichnungen werden sie beschrieben und das damit durchführbare Verfahren wird erklärt. Schliesslich sind verschiedene aufgenommene Weg-Kraft-Diagramme gezeigt, welche diskutiert werden.

Es zeigt:
- Figur 1:: Den Aufbau eines Fahrbahnüberganges vom Typ Finger in einer perspektivischen Ansicht, mit in Längsrichtung aufgeschnittener Fahrbahn;
- Figur 2:: Den Aufbau des Fahrbahnüberganges in einer Schnittansicht von der Seite her gesehen;
- Figur 3:: Eine erste Variante einer Prüfvorrichtung für die Zustandsprüfung eines Fahrbahnüberganges vom Typ Finger;
- Figur 4:: Eine zweite Variante einer Prüfvorrichtung für die Zustandsprüfung eines Fahrbahnüberganges vom Typ Finger;
- Figur 5:: Ein typisches Weg-Kraft-Diagramm aus der Messung an einem Fahrbahnübergangs-Element, das eine Zeitlang in Betrieb war;
- Figur 6:: Das Weg-Kraft-Diagramm aus der Messung an einem neuen, frisch verlegten Fahrbahnübergangs-Element;
- Figur 7:: Das Weg-Kraft-Diagramm aus der Messung an einem durch Korrosion völlig defekten Fahrbahnübergangs-Element, das sofort ersetzt werden muss;
- Figur 8:: Die typische elastische Aufschwenkbewegung eines neuen Fahrbahnübergangs-Elementes unter der Zugkraft F an den Fingerspitzen;
- Figur 9:: Eine typische Aufschwenkbewegung eines schadhaften Fahrbahnübergangs-Elementes unter der gleichen Zugkraft F an den Fingerspitzen.

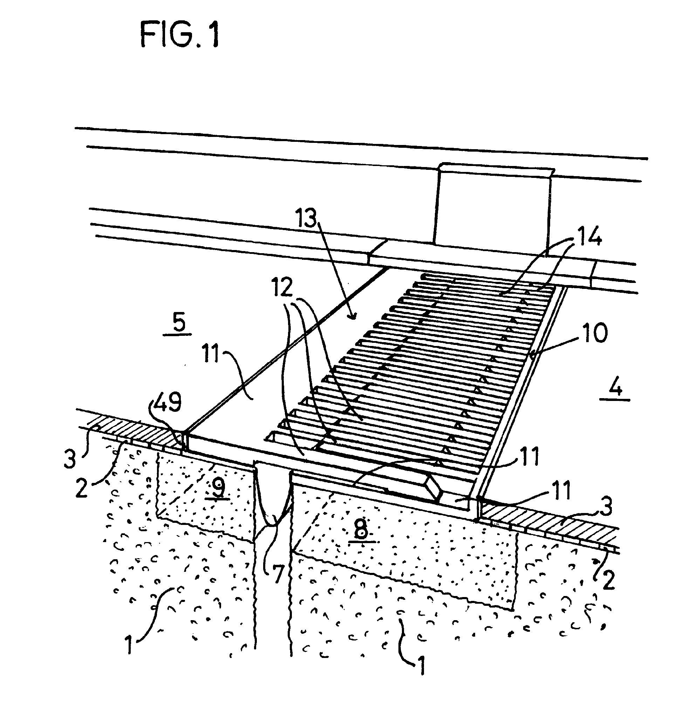

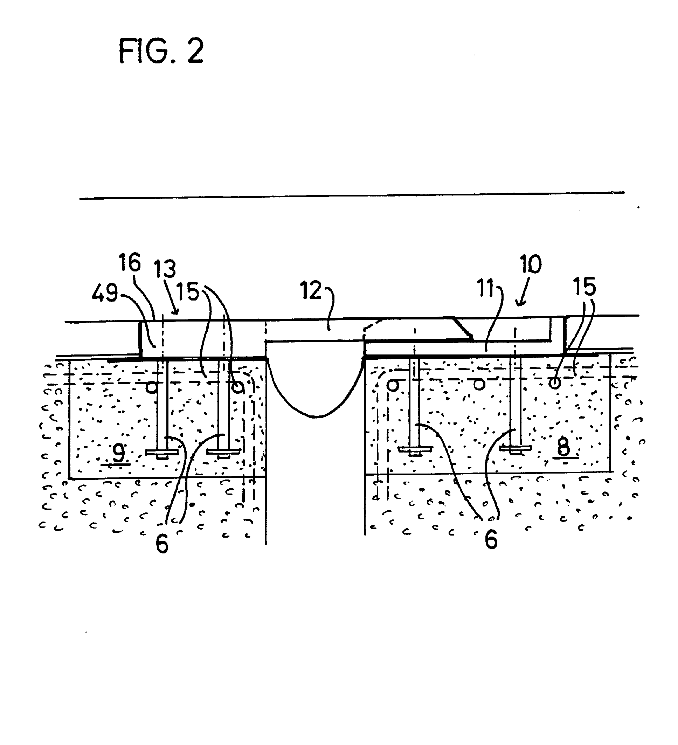

Zunächst ist in Figur 1 der Aufbau eines Fahrbahnüberganges vom Typ Finger in einer perspektivischen Ansicht dargestellt. Hierzu ist die Fahrbahn in Längsrichtung aufgeschnitten und gewährt einen Blick auf die entsprechende Schnittfläche. Man sieht den Fahrbahnunterbau 1, die Abdichtfolie 2 und zuoberst den Fahrbahnbelag 3. Der Fahrbahnabschnitt 4 rechts gehört zum Beispiel zum Festland, der Fahrbahnabschnitt 5 links zu einer Brücke. Nun wird an den Enden der beiden Fahrbahnabschnitte 4,5 je eine Aussparung vorgesehen. In diese Aussparungen Versetzlehren mit Ankerhülsen montiert. Diese Ankerhülsen 6 sind in Figur 2 sichtbar. Dann werden die hier in Figur 1 gezeigten Aussparungen unter Einschluss der Ankerhülsen mit Beton zu Betonblöcken 8,9 ausgegossen. Nach dem Aushärten des Betons werden die Versetzlehren entfernt. Die Ankerhülsen 6 befinden sich nun an den durch die Versetzlehre genau definierten Positionen. Die Oberfläche des Betons wird mit Feinmörtel nachbehandelt. Jetzt wird als nächstes die Wasserrinne 7 zwischen die beiden Betonblöcke 8,9 montiert. Diese Wasserrinne 7 wird beidseits mit den Abdichtfolien 2 verklebt. Auf diese Folie wird zunächst das Element 10 mit der Auflagefläche 11 gelegt, das hier im Bild an den Fahrbahnabschnitt 4 auf der rechten Bildseite anschliesst. Dieses Element 10 wird mittels der Ankerhülsen 6 fest mit dem darunter liegenden Betonfundament 8 verschraubt. Das Element 10 selbst ist ein Verbundelement aus Stahl und Elastomer, wobei der Stahl rundum von einer Schicht Elastomer eingefasst ist. Es bildet eine Auflagefläche 11 für die Finger 12 des gegenüberliegenden Elementes 13, und dort wo keine Finger zu liegen kommen, bildet es selbst entsprechende Finger 14, die fest aus der Auflagefläche 11 ausgeformt sind und die ihrerseits zwischen die Finger 12 des gegenüberliegenden Elementes 13 zu liegen kommen. Jetzt wird das gegenüberliegende Element 13 versetzt und in gleicher Weise mit dem darunterliegenden Betonfundament 9 verschraubt, sodass die Finger 12 des Elementes 13 in die Zwischenräume zwischen den Fingern 14 des ersten Elementes 10 eingreifen. An den Wurzeln der Finger 12 des Elementes 13 ist die Elastomer-Beschichtung in eine eigentliche Elastomerplatte 49 ausgeformt. Die Stahlkerne sind also mit diesem Elastomerblock 49 vergossen, wobei aber die Dicke des Elastomerblockes 49 wesentlich grösser ist als jene der Stähle, welche jeweils den Kern der Finger 13 bilden. Das Element 13 ist durch diesen Elastomerblock 49 schlagdämpfend und mit einer gewissen Elastizität mit dem darunterliegenden Betonblock 9 verschraubt. Die Elastizität des Elastomerblockes wird auch dafür ausgenützt, dass die Fingerspitzen mit einer gewissen Vorspannung auf der Auflagefläche 11 aufliegen und nicht bloss wie lose Kragarme vorstehen und erst durch die Belastung durch die Fahrzeuge schlagartig auf die Auflage gepresst werden. Wie man anhand von Figur 1 erkennt, schliessen die Finger 12,14 der Elemente 10,13 über die Fahrzeugbahn-Querrichtung dicht aneinander an und für einen in Längsrichtung abrollenden Reifen, der breiter als mehrere nebeneinanderliegende, aneinander anschliessende Finger 12,14 ist, wird eine quasi durchgehende Abrollfläche gebildet. Vor den Fingerspitzen verbleibt Raum für die zu erwartende Dilatation.

In Figur 2 ist der Aufbau dieses Fahrbahnüberganges noch in einer Schnittansicht von der Seite her gesehen gezeigt. Man erkennt die Ankerhülsen 6 und ausserdem die Armierungen 15 in den Betonfundamenten 8,9. Das zuerst versetzte Element 10 rechts im Bild wirkt als Auflagefläche 11 für das links im Bild versetzte Element 13 bzw. für die Finger 12 dieses Elementes 13. Aufgrund dieser Konstruktion mit diesen Elementen 10,13 aus einem Elastomer-Stahl-Verbund können dieselben mechanische Stösse aufgrund des Überrollens mit Fahrzeugen weitgehend elastisch dämpfen. Die Elemente 10,13 und deren Elastomer-Stahl-Verbund gilt als alterungsbeständig, resisent gegen Ozon, UV-Bestrahlung, gegen Öle, Benzin und Streusalz. Trotzdem hat sich gezeigt, dass der Zahn der Zeit nicht spurlos an den Elementen 10,13 vorbeigeht. Namentlich an den Stahlkernen tritt Korrosion auf, sobald sich Risse in der Elastomerschicht bilden, und diese sind offenbar im Lauf der Zeit aus unterschiedlichen Gründen unvermeidlich. Bei korrodierenden Stahlkernen der Fingerelemente 10,13 wird der Verbund zum Elastomer unterbrochen, mit entsprechenden Auswirkungen auf die mechanischen Eigenschaften der Elemente 10,13. Die den Übergang passierenden Fahrzeuge belasten besonders das mit seinen Fingern 12 auf dem anderen Element 10 aufliegende Element 13, also das im Bild linke Element 13. Diese Belastung durch passierende Fahrzeuge ist komplex. Losgelöste Elemente können durch diese Belastung kippen, verschoben werden, in die Fuge fallen oder angehoben und ganz aus dem Fugenbereich weg verschoben werden. Wenn das der Fall ist, wäre der Ersatz des Elementes 13 längst fällig gewesen. Die Erfindung zielt darauf ab, durch die Vermessung der mechanischen Eigenschaften der Elemente 13 Unterbrüche des Verbundes zwischen Stahlplatte und Elastomer schon im frühen Stadium festzustellen, so dass die Elemente ersetzt werden können, bevor die Fingerplatte ganz losgelöst ist.

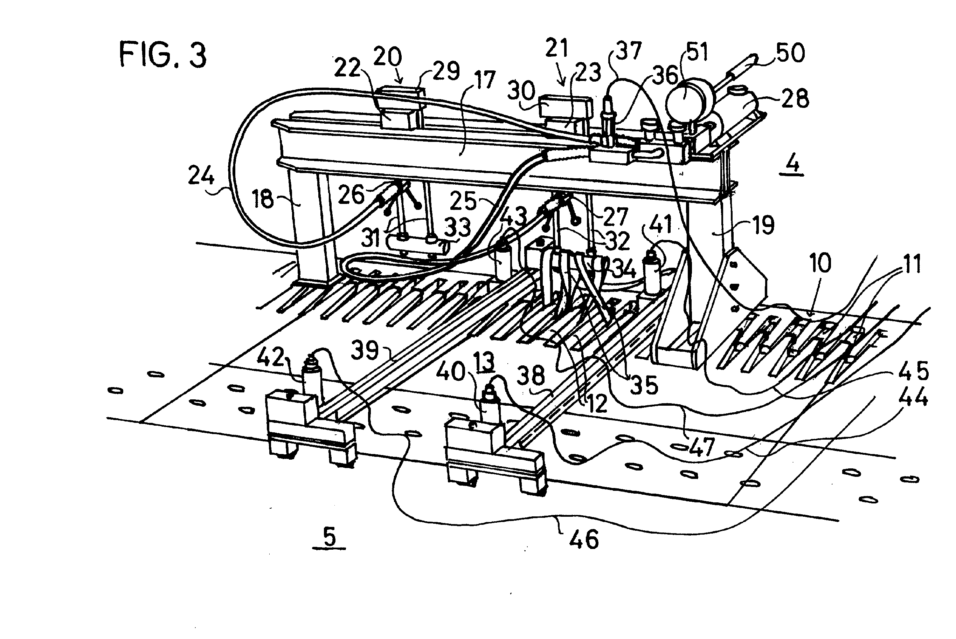

Wie nach der Erfindung diese Eigenschaften ermittelt werden, wird nachfolgend anhand einer ersten Variante einer Prüfvorrichtung für die Zustandsprüfung eines Fahrbahnüberganges vom Typ Finger dargestellt, die in Figur 3 dargestellt ist. Die Vorrichtung besteht hier aus einem Brückenrahmen 17, der zwei Brückensockel 18,19 aufweist, wobei die Spannweite der Brücke so bemessen ist, dass sie ein einzelnes Element 13 des Fahrbahnüberganges überspannt. Hinter der Brücke liegt hier der Fahrbahnabschnitt 4, an weichen das Element 10 mit der Auflagefläche 11 anschliesst. Die hier gezeigte Vorrichtung weist zwei Hebezeuge 20,21 auf. Jedes besteht aus einer hydraulischen Kolben-Zylindereinheit 22,23, die über einen Hydraulikschlauch 24,25 mit Sperrhahn 26,27 von Hydrauliköl aus einer Hydraulikpumpe 28 mit Manometer 50 versorgt wird. Die Kolbenspitze des Kolbens der Kolben-Zylindereinheiten 22,23 beaufschlagt nach oben ein Trägerjoch 29,30 und über zwei an diesem befestigte Zugstangen 31,32 je einen Rundstahl 33,34. Zum Prüfen eines Fahrbahn-Übergangselements wird zunächst ein Spanngurt 35 unter einem oder mehreren Fingern 12 des Elementes 13 hindurchgeführt und dieser Spanngurt 35 wird an einem Rundstahl, im Bild am Rundstahl 34 angehängt. Als eine Alternative bietet sich allerdings auch eine Krafteinleitung mit Klemmen oder Zangen an, die manuell mit Schrauben oder automatisch mit Motoren oder pneumatischen oder hydraulischen Hilfsmitteln gespannt werden. Die Spanngurten haben nämlich den Nachteil, dass die Finger für das Unterlegen der Gurten einen entsprechenden Zwischenraum aufweisen müssen, der nicht bei allen Modellen vorhanden ist. Bei der hier gezeigten Vorrichtung geht es hingegen um die Offenbarung des Prinzips und bei den hier gezeigten Fingerübergängen ist eine Spanngurte einsetzbar. Am Hydraulikausgang der Hydraulikpumpe 28 ist ein elektrischer Drucksensor 36 eingebaut. Der jeweilige Druckwert wird als elektrisches Signal über das Kabel 37 an ein Datenerfassungssystem weitergeleitet, vorzugsweise an einen Personalcomputer. Eine höhere Messgenauigkeit wird allerdings erreicht, wenn die Kraft statt über den Hydraulikdruck mit einer elektronischen Kraftmesszelle erfasst wird. Wird mit der Hydraulikpumpe 28 Hydrauliköl gefördert, so steigt der Hydraulikdruck in den Leitungen 24,25 an und der Kolben der jeweiligen Zylinder-Kolbeneinheit 22,23 fährt aus und zieht letztlich den Rundstahl 33,34 mit der Spanngurte 35 hoch. Bei Widerstand ist ein entsprechend höherer Hydraulikdruck nötig. Unter einem genügend grossen Hydraulikdruck wirkt ein derartiges Drehmoment auf das Fahrbahn-Übergangselement 13, dass dieses leicht hochgeschwenkt wird. Charakteristisch ist hierbei, wo sich die effektive Schwenkachse befindet und welchen Weg das hintere und vordere Ende des Elementes 13 als Funktion des Drehmomentes beschreibt. Je nach innerem Aufbau der Fahrbahnübergangselemente können auch anders gewählte Positionen der Wegsensoren notwendig sein. Wird der Hydraulikdruck ganz allmählich gesteigert und somit das Element 13 an seinen Fingerspitzen sanft angehoben, so lässt sich ein Weg-Kraft-Diagramm erstellen. Zur Erfassung des Weges des Elementes 13 schliesst die hier gezeigte Vorrichtung wenigstens einen zweiten Brückenrahmen 38 bzw. 39 ein. Hier im Bild sind allerdings zwei derartige zusätzliche Brückenrahmen 38,39 eingesetzt. Diese Brückenrahmen 38,39 sind mit je zwei elektrischen Wegsensoren 40,41;42,43 ausgerüstet. Die Kabel 44,45;46,47 übermitteln deren elektrischen Signale an ein Datenerfassungssystem, das hier allerdings nicht dargestellt ist. Die Wegsensoren 40-43 können an den Brückenrahmen 38,39 in deren Längsrichtung verschoben werden, und die Sensorspitzen können vertikal justiert werden, sodass sie vor Ort genau auf die Oberfläche des zu vermessenden Elementes 13 abgesenkt werden können. Mindestens ein solcher Brückenrahmen 38,39 wird so über das Fahrbahnelement 13 gestellt, dass seine lichte Weite das Element 13 vollständig überspannt und die Brückenfüsse also diesseits und jenseits des Fahrbahnüberganges ruhen. Dann werden die Wegsensoren 40-43 so positioniert, dass sie genau über dem hinteren und vorderen Rand des zu prüfenden Fahrbahnelementes 13 liegen und dieses dort berühren. Je nach innerem Aufbau der Fahrbahnübergangselemente können allerdings auch andere Positionen der Wegsensoren hilfreich oder notwendig sein. Nun wird der Druck im Hydrauliksystem durch Betätigen der Hydraulikpumpe 28 ganz langsam gesteigert. Die Hydraulikpumpe weist hierzu einen Hebel 50 zum Pumpen auf. Der Hydraulikdruck ist ein Mass für die auf die Fingerspitzen wirkende Hebezugkraft und wird vom Rechner als elektrisches Signal des Drucksensors 36 erfasst. Als Alternative zur Kraftmessung können auch elektronische Kraftmesszellen eingesetzt werden. Gleichzeitig werden die von den Wegsensoren 40-43 ermittelten Positionsänderungen des hinteren und vorderen Randes des Fahrbahnübergangs-Elementes 13 erfasst und als Wege gegen die Zugkraft aufgetragen. Der Rechner bzw. der Personalcomputer liefert schliesslich ein entsprechendes Weg-Kraft-Diagramm. Diese Messung wird an allen zu prüfenden Elementen durchgeführt und die Diagramme können hernach diskutiert werden. Das erlaubt schliesslich eine Voraussage über die noch zu erwartende Lebensdauer des geprüften Elementes 13 oder liefert die Entscheidungsgrundlage dafür, ob dieses allenfalls sofort zu ersetzen ist. Je schadhafter ein Element 13 ist, umso grösser ist die Aufschwenkung bei einer bestimmten Zugkraft. Einige beispielsweise Kraft-Weg-Diagramme werden später noch diskutiert und interpretiert.

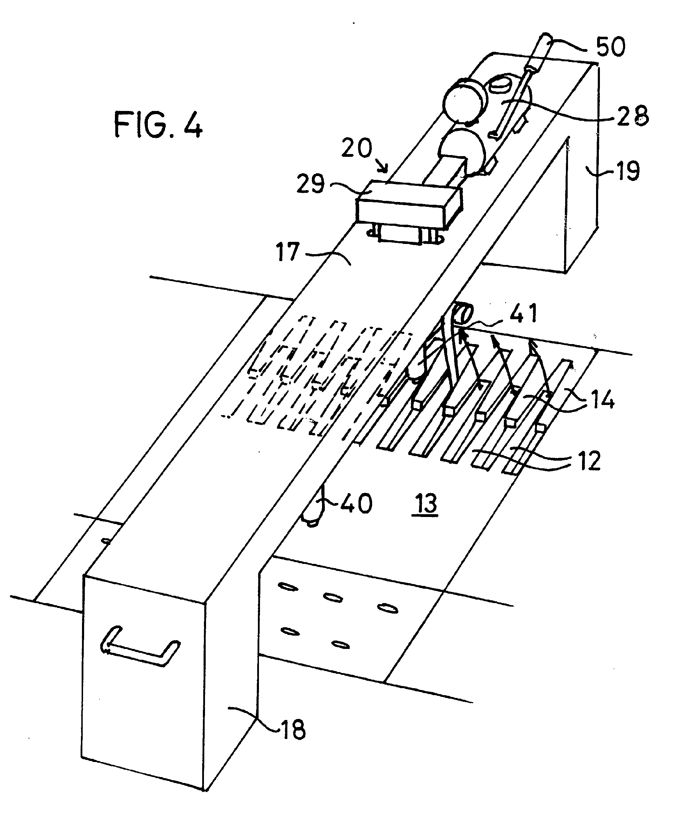

Die Figur 4 zeigt eine Variante einer Prüfvorrichtung für die Zustandsprüfung eines Fahrbahnüberganges vom Typ Finger. Anstatt dass sie aus zwei Brückenrahmen besteht, einen zum Aufbringen der Zugkraft und einen zum Ermitteln der Positionsveränderungen des hinteren und vorderen Randes des Prüfelementes, besteht die hier gezeigte Vorrichtung aus einem einzigen Brückenrahmen 17. Dieser wird längs über das zu prüfende Fahrbahn-Übergangselement 13 gestellt, sodass seine Sockel 18,19 dies- und jenseits des Fahrbahnüberganges auf der Fahrbahn ruhen. Am Brückenrahmen 17 sind nebst dem Hebezeug 20 aus einer hydraulischen Kolben-Zylindereinheit 29 mit Hydraulikpumpe 28 mit Pumphebel 51 wie schon zu Figur 3 beschrieben auch die elektrischen Wegsensoren 40,41 montiert, und zwar längs des Rahmens 17 verschiebbar, sodass sie von Fall zu Fall über dem hinteren und vorderen Rand eines zu prüfenden Elementes 13 positioniert werden können. Ausserdem können die Spitzen der Sensoren 40,41 vertikal verschoben werden, damit sie vor Ort genau auf die Oberfläche des zu vermessenden Elementes 13 abgesenkt werden können. Diese Vorrichtung ist etwas weniger frei an Gegebenheiten anpassbar, dafür noch kompakter und kann sehr rasch über einen Fahrbahnübergang gestellt werden. Die Finger 12 des zu prüfenden Elementes 13 werden am Hebezeug 20 befestigt und die Wegsensoren 40,41 werden danach einjustiert. Damit ist die Vorrichtung bereit für die Durchführung der Prüfung des darunterliegenden Elementes 13. Es ist klar, dass anstelle eines hydraulischen Hebezeuges auch ein rein mechanisch arbeitendes Hebezeug eingesetzt werden kann. Anstelle der Hydraulikzylinder tritt dann etwa eine Gewindespindel, die entweder von Hand oder motorisch, etwa mittels eines batteriebetriebenen Elektromotors, betrieben werden kann. Die Zugkraft wird in diesem Fall nicht über einen Hydraulikdruck gemessen, sondern über handelsübliche elektronische Kraftmesszellen. Besonders wenn die Krafteinleitung mittels mechanischer Klemmen oder Zangen erfolgt, so können diese automatisch mit Motoren oder pneumatischen oder hydraulischen Hilfsmitteln gespannt werden. Auch die Antriebe für das Anheben und eigentliche Prüfen können mit motorischen Antrieben versehen sein. In diesem Fall können alle Funktionen der Vorrichtung elektronisch gesteuert und geregelt sein, sodass der ganze Prüfvorgang weitgehend automatisiert werden kann. Eine solche Vorrichtung braucht dann bloss noch über den zu prüfenden Fahrbahnübergang gefahren und gestellt zu werden, und auf Knopfdruck wird das darunterliegende Fahrbahnübergangselement ergriffen, bis an des Grenze des leichteren Nachgebens angehoben und anschliessend wieder abgesenkt und losgelassen, wobei die applizierten Aktions- und die angetroffenen Reaktionskräfte in einen Datenspeicher aufgenommen werden.

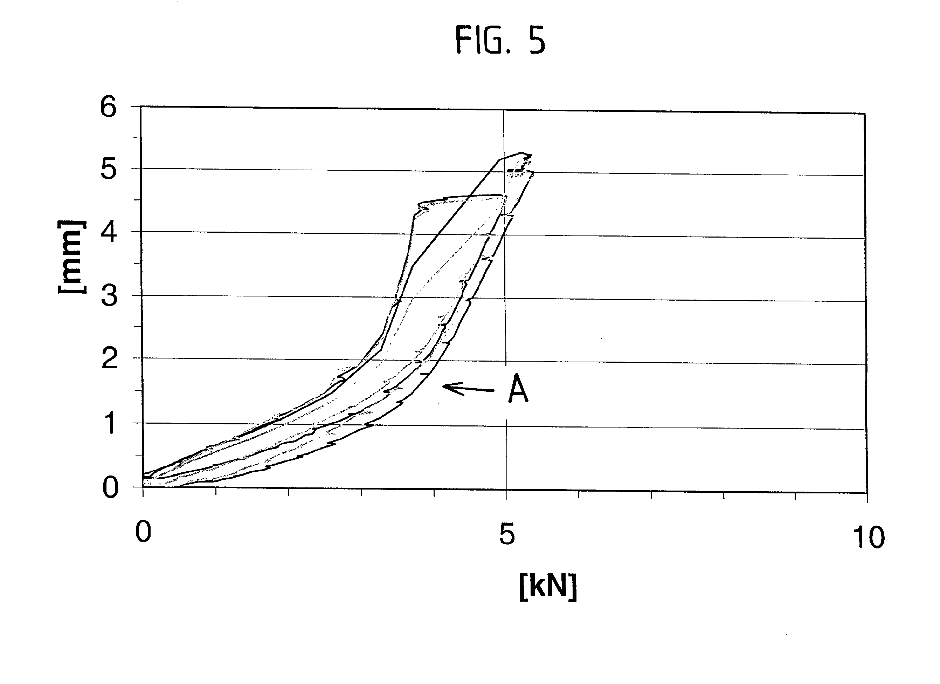

In den folgenden Figuren werden einige Weg-Kraft-Diagramme aus Messungen an verschiedenen Elementen dargestellt. So zeigt die Figur 5 das typische Diagramm eines Fahrbahnüberganges, der schon einige Zeit in Betrieb war. Zunächst verläuft die Kurve flach, weil sich die Federsteifigkeiten des Fingerlelementes und der Auflage addieren. Beim Punkt A heben die Finger von der Auflage ab. Demnach entspricht die beim Punkt A gemessene Kraft der Auflage- und Anpresskraft der Finger auf der Gegenplatte. Nach dem Abheben der Finger von der Unterlage beim Punkt A wirkt nur noch die Federsteifigkeit des geprüften Elementes. Diese ist kleiner als die Summe der Reaktionskräfte vor Punkt A und deshalb steigt die Kurve stärker an, d.h. pro Krafteinheit dreht sich das Element jetzt um einen grösseren Winkel und sein Ende legt einen grösseren Weg zurück. Aus der Steigung der Kurve nach dem Punkt A lässt sich nun die Federsteifigkeit des Elementes ableiten. Wird dann bei maximal aufgeschwenktem Element die Kraft wieder reduziert, so bleibt die Auslenkung zunächst über eine gewisse Kraftreduktion praktisch unverändert, um dann mit einer ähnlichen Kurve wieder nahezu zum Ausgangszustand zurückzugehen, der erst nach einiger Zeit vollständig erreicht wird. Die Hysterese zwischen ansteigendem und abfallendem Kurvenast ist deshalb so gross, weil sie sich aus der Hysterese des Elementes selbst und zusätzlich der Reibung des Hydraulikzylinders zusammensetzt. Wird die Kraft hingegen über eine Kraftmessdose ermittelt, wird die Messgenauigkeit verbessert und die Hysterese kleiner, da dann die Reibung des Hydraulikzylinders nicht mehr mitgemessen wird. Dieses Diagramm zeigt also ein im wesentlichen elastisches Aufschwenken des Prüfelementes.

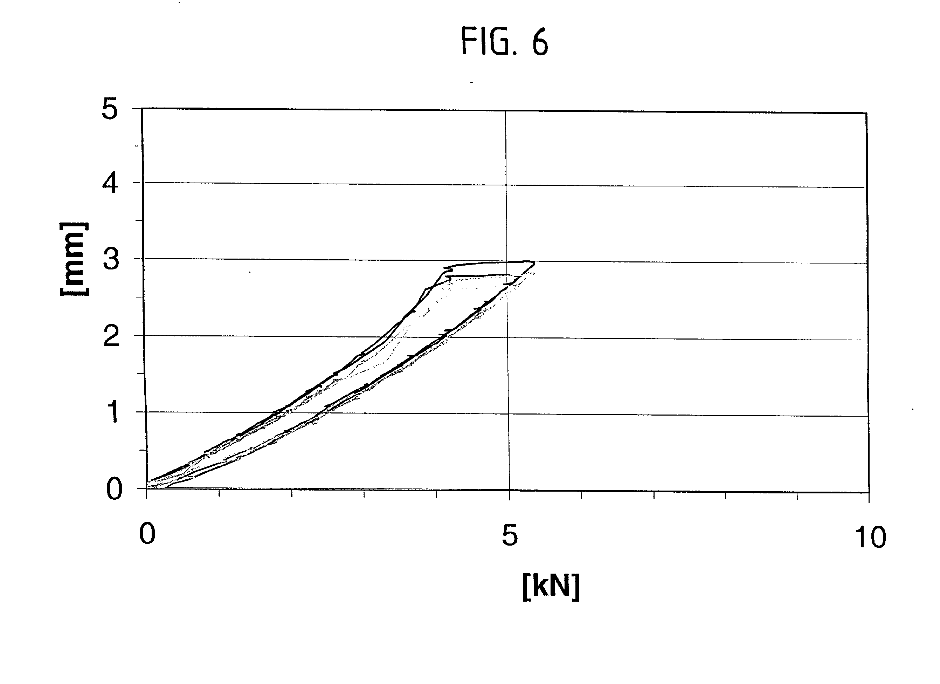

Die Figur 6 zeigt nun das Weg-Kraft-Diagramm aus der Messung an einem neuen, frisch verlegten Fahrbahnübergangs-Element. Diese Kurve weist den in Figur 5 bei A deutlich sichtbaren Knick erst ansatzweise am Ende der Kurve auf. Bei dieser Prüfung wurde die Entlastung nach dem Erreichen einer maximalen Prüflast, die das Element nicht schädigt, eingeleitet. Da die maximale Prüflast bei diesem Element nur gerade die Auflage- und Anpresskraft der Finger auf der Auflage erreichte, ist die Federsteifigkeit des Elementes aus der Kurve nicht bestimmbar. Die hohe Auflage- und Anpresskraft deutet in diesem Fall aber klar auf den intakten Zustand des Elementes hin.

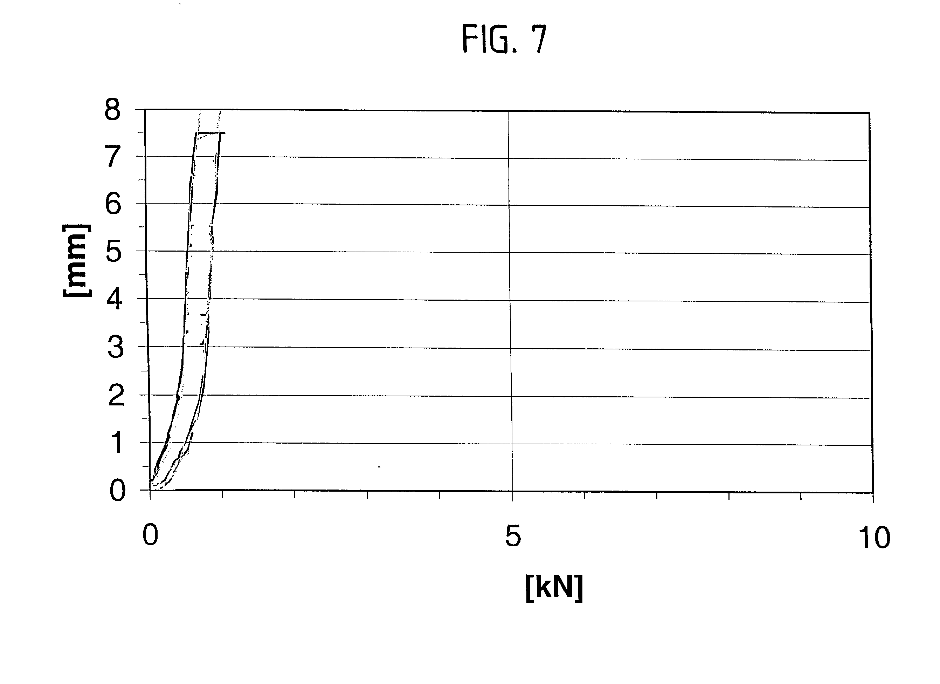

Die Figur 7 zeigt das Weg-Kraft-Diagramm aus der Messung an einem durch Korrosion stark defekten Fahrbahnübergangs-Element, das sofort ersetzt werden muss. Man erkennt an diesem Diagramm, dass der Weg mit zunehmender Zugkraft, obwohl diese im Vergleich zur nötigen Zugkraft an neuen Elementen sehr viel kleiner ist, sehr frühzeitig wächst und steil ansteigt. Der Knickpunkt A (Fig. 5) der Kurve liegt hier ganz links, praktisch schon beim ersten Aufbringen einer Hebekraft. Das bedeutet, dass die Finger durch die Elastomerplatte nicht mehr auf die Auflage gepresst werden. Der steile Anstieg der Kurve zeigt an, dass die Federsteifigkeit des Elementes sehr klein ist und die Kraft zum Drehen des Elementes nur noch wenig über dem Eigengewicht liegt. Das Fingerelement liegt praktisch nur noch lose auf dem Fahrbahnübergang auf und wird durch den Elastomerblock nicht mehr gehalten und nach unten vorgespannt. Man muss es unverzüglich ersetzen.

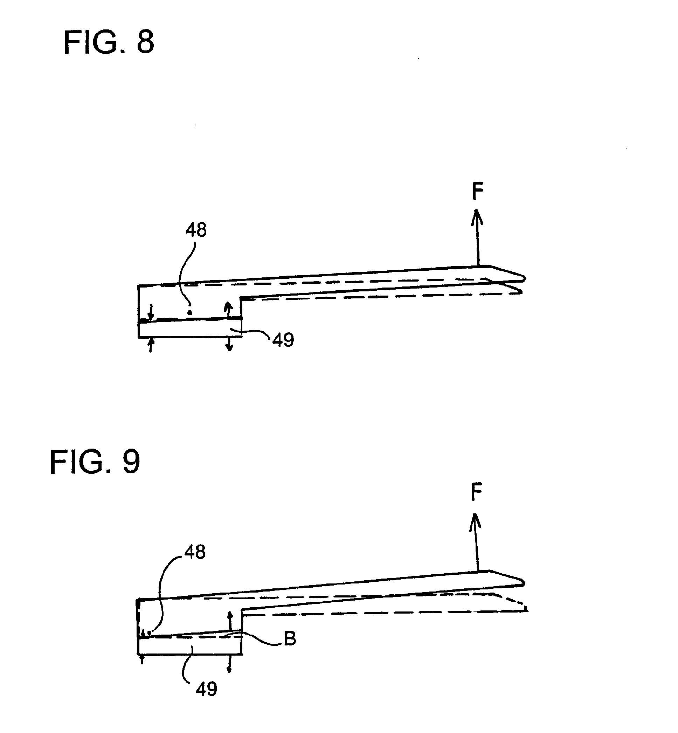

In Figur 8 wird zur weiteren Erklärung die typische elastische Aufschwenkbewegung eines neuen Fahrbahnübergangs-Elementes unter der Zugkraft F an den Fingerspitzen dargestellt. Zunächst ist das Fahrbahnübergangs-Element strichliniert in seiner Ausgangs- und Ruheposition dargestellt, und dann darüber in der unter der Zugkraft F aufgeschwenkten Position mit durchgezogenen Linien. Die wirksame Schwenkachse 48 befindet sich hier nahe dem Elastomerblock 49, der auch für die elastische Zurückformung der Verschwenkung verantwortlich ist, wenn die Zugkraft F wieder zurückgenommen wird. Dieser Elastomerblock 49 wird unter der Zugkraft F auf seiner hinteren Seite etwas zusammengedrückt, wie die Kraftpfeile andeuten, und auf seiner vorderen Seite auseinandergezogen, wie ebenfalls mit Kraftpfeilen angezeigt.

In Figur 9 ist zum Vergleich eine typische Aufschwenkbewegung eines schadhaften Fahrbahnübergangs-Elementes unter der gleichen Zugkraft F an den Fingerspitzen gezeigt. Wiederum ist das Fahrbahnübergangs-Element in Ausgangs- und Ruheposition strichliniert dargestellt und dann darüber in der aufgeschwenkten Position, die sich unter der nach oben ziehenden Zugkraft F einstellt. Weil der Verbund zwischen Elastomer und Stahl im Bereich B gelöst ist, wandert die wirksame Schwenkachse 48 nach hinten, das heisst im Bild nach links, und entsprechend ist der wirksame Kraftarm verlängert. Es ist klar, dass bei gleicher Zugkraft und infolge des durch die Ablösung des Verbundes verlängerten wirksamen Kraftarmes der bewirkte Schwenkweg erheblich grösser ist.

Bei der Prüfung eines Fahrbahnübergangs-Elementes sind verschiedene Randbedingungen zu beachten. So darf die Zugkraft eine für jeden Typ eines solchen Elementes zu spezifizierende maximale Kraft nicht überschreiten, damit die Elemente durch die Prüfung nicht beschädigt werden. Eine analoge Limite ist für das maximale Anheben (Weg) der Finger zu beachten. Des weiteren darf die Krafteinleitung in die Finger dieselben ebenfalls nicht beschädigen.

## Patentansprüche

1. Verfahren zur Zustandsprüfung von Fahrbahnübergängen vom Typ Finger, welche je ein erstes Element (10) aus einem Elastomer/Stahlverbund zum Anschluss an einen Fahrbahnabschnitt (4) aufweisen, welches Element (10) Finger (14) und dazwischen angeordnete Auflageflächen (11) aufweist, sowie ein dazu gehöriges zweites Element (13) aus Elastomer/Stahlverbund zum Anschluss an den anschliessenden Fahrbahnabschnitt (5), welches Element (13) in seinem hinteren Bereich über einen Elastomerblock mit dem Untergrund verschraubt ist und Finger (12) aufweist, welche auf den Auflageflächen (11) zwischen den Fingern (14) des ersten Elementes (10) aufliegen, ***dadurch gekennzeichnet,* dass** jedes Elastomer/Stahl-Element (13) mit aufliegenden Fingern (12) an denselben mit steigender Zugkraft angehoben wird und die Schwenkung des Elementes (13) in Abhängigkeit der Zugkraft vermessen wird.

2. Verfahren zur Zustandsprüfung von Fahrbahnübergängen vom Typ Finger nach Anspruch 1, ***dadurch gekennzeichnet,* dass** die Finger (12) mittels eines hydraulischen oder mechanischen Hebezeuges (20,21) angehoben werden und die Zugkraft mit einer elektronischen Kraftmesszelle erfasst oder der Hydraulikdruck des Hebezeuges (20,21) als Mass für die Zugkraft in ein elektrisches Signal umgewandelt wird und die Schwenkbewegung des Elementes (13) mittels mindestens eines elektrischen Wegsensors (40-43) zur Erfassung der zurückgelegten Wegstrecke eines bestimmten Punktes am Element (13) ermittelt wird, und die elektrischen Signale zu einem Weg-Kraft-Diagramm verarbeitet werden.

3. Verfahren zur Zustandsprüfung von Fahrbahnübergängen vom Typ Finger nach einem der Ansprüche 1 bis 2, ***dadurch gekennzeichnet,* dass** die Finger (12) mittels eines hydraulischen oder mechanischen, Hebezeuges (20,21) programmgesteuert angehoben werden, indem die Finger (12) mit Klemmen oder Zangen ergriffen und unter steigender und laufend erfasster Zugkraft angehoben werden werden, und die dadurch bewirkte Schwenkbewegung des Elementes (13) mittels zweier elektrischer Wegsensoren (40-43) erfasst wird.

4. Verfahren zur Zustandsprüfung von Fahrbahnübergängen vom Typ Finger nach einem der Ansprüche 1 bis 2, ***dadurch gekennzeichnet,* dass** die Finger (12) mittels eines hydraulischen Hebezeuges (20,21) angehoben werden, indem Spanngurten (35) unter einem oder mehreren aufliegenden Fingern (12) hindurchgezogen werden und hernach das Hebezeug (20,21) die Finger (12) mittels dieser Spanngurten (35) anhebt, und die Schwenkbewegung des Elementes (13) mittels zwei elektrischer Wegsensoren (40-43) erfasst wird.

5. Verfahren zur Zustandsprüfung von Fahrbahnübergängen vom Typ Finger nach einem der Ansprüche 1 bis 4, ***dadurch gekennzeichnet,* dass** die mittels eines elektrischen Drucksensors (36) ermittelten elektrischen Signale vom Hydraulikdruck oder die Signale der elektronischen Kraftmesszelle zur Messung der Zugkraft einerseits und die elektrischen Signale der Wegsensoren (40-43) andrerseits mittels eines Personalcomputers zu einem Weg-Kraft-Diagramm verrechnet und dargestellt werden.

6. Vorrichtung zur Durchführung des Verfahrens zur Zustandsprüfung von Fahrbahnübergängen vom Typ Finger nach Anspruch 1, ***dadurch gekennzeichnet,* dass** sie einen Brückenrahmen (17) aufweist, sowie ein an diesem befestigtes Hebezeug (20;21) mit variabler, messbarer Zugkraft, sowie zwei elektrische Wegsensoren (40-43) am gleichen (17) oder an einem weiteren Brückenrahmen (38;39) zur gleichzeitigen Messung von vertikalen Bewegungen am vorderen und hinteren Rand des zu messenden Elastomer/Stahl-Elementes (13) mit den aufliegenden Fingern (12).

7. Vorrichtung nach Anspruch 6 zur Durchführung des Verfahrens zur Zustandsprüfung von Fahrbahnübergängen vom Typ Finger nach Anspruch 1, ***dadurch gekennzeichnet,* dass** zur Messung der Zugkraft ein elektronischer Kraftsensor vorhanden ist, und dass ein Personalcomputer zur Verarbeitung und Darstellung der elektrischen Signale vorhanden ist, welche einerseits die Zugkraft generiert und andrerseits die Wegsensoren (40-43) abgeben.

8. Vorrichtung nach Anspruch 6 zur Durchführung des Verfahrens zur Zustandsprüfung von Fahrbahnübergängen vom Typ Finger nach Anspruch 1, ***dadurch gekennzeichnet,* dass** sie einen einzigen Brückenrahmen (17) aufweist, an dem mindestens ein hydraulisch oder mechanisch wirkendes Hebezeug (20) mit elektronischem Zugkraftsensor oder Drucksensor zur Messung der Zugkraft sowie zwei elektrische Wegsensoren (40,41) angebaut sind, und dass ein Personalcomputer zur Verarbeitung der elektrischen Signale vorhanden ist, welche einerseits die Zugkraft generiert und andrerseits die Wegsensoren (40-43) abgeben.

9. Vorrichtung nach einem der Ansprüche 6 bis 8 zur Durchführung des Verfahrens zur Zustandsprüfung von Fahrbahnübergängen vom Typ Finger nach Anspruch 1, ***dadurch gekennzeichnet,* dass** sie einen einzigen Brückenrahmen (17) aufweist, an dem mindestens ein hydraulisch oder mechanisch wirkendes, programmsteuerbares Hebezeug (20) mit elektronischem Zugkraftsensor oder elektronischem Drucksensor zur Messung der Zugkraft sowie zwei elektrische Wegsensoren (40,41) angebaut sind, und dass ein Personalcomputer zur Verarbeitung der elektrischen Signale vorhanden ist, welche einerseits die Zugkraft generiert und andrerseits die Wegsensoren (40-43) abgeben.

10. Vorrichtung nach einem der Ansprüche 6 bis 9 zur Durchführung des Verfahrens zur Zustandsprüfung von Fahrbahnübergängen vom Typ Finger nach Anspruch 1, ***dadurch gekennzeichnet,* dass** das hydraulisch wirkende Hebezeug (20,21) eine hydraulische Kolben-Zylindereinheit (22,23) am Brückenrahmen (17) einschliesst, mittels welcher durch hydraulisches Ausfahren eines Kolbens am Brückenrahmen (17) ein Trägerjoch (29,30) nach oben anhebbar ist, wobei das Trägerjoch (29,30) über Zugstangen (31,32) mit einem unter dem Brückenrahmen (17) hängenden Rundstahl (33,34) verbunden ist, an welchem eine unter den anzuhebenden Fingern (12) hindurchgeführte Spanngurte (35) befestigbar sind.
